# EUROPEAN PATENT APPLICATION

(11) **EP 2 482 587 A1**
(43) Date of publication of application: **01.08.2012**
(21) Application number: 11305071.0
(22) Date of filing: 24.01.2011
(51) Int. Cl.: H04W 36/04

(54) **Mobility management of a mobile device moving from a macrocell towards a home cell with access control**

(71) Applicant: Alcatel Lucent, 75007 Paris (FR)
(72) Inventor: Ratovelomanana, Frédéric, 78141 Velizy (FR); Deville, Frédéric, 78141 Velizy (FR); Sapiano, Philip, Swindon WI SN5 7DJ (GB)
(74) Representative: Benezeth, Philippe J.L. M.

(57) **Abstract**

The present invention provides a method of mobility management of a mobile device moving within a macro cell and having a first radio coverage area including a plurality of home cells. The method comprises : establishing a communication session with said mobile unit within said macro cell, determining at least one allowable home cell which said mobile device is allowed to access, and at least one location related to respective said at least one allowable home cells, determining a second radio coverage area within the first coverage area comprising said at least one cell location, detecting said mobile device entering said second radio coverage area, and thereupon triggering said mobile device to start measuring signals broadcast by said at least one allowable home cell. The present invention provides also the radio controller and the associated mobility management node.

## Description

### FIELD OF THE INVENTION

The invention relates generally to telecommunication systems and in particular the management of mobility of mobile device from a macrocell towards a small cell, and associated network elements.

### DESCRIPTION OF THE RELATED ART

In a radio communication system, a radio base station (or radio access node), such as a Base Transceiver Station (BTS) for the Global System Mobility (GSM) standard, or a NodeB for Universal Mobile Telephone System (UMTS) standard, or an e-NodeB for Long Term Evolution (LTE) standard, communicates with mobile devices, such as mobile phones, PDAs or laptops equipped with radio module. The mobile device typically communicates with a macro base station located within a range of a few kilometers; the area covered by such a base station is referred to as a macro cell. The power of these antennas can worry the people living not far from the base station. Moreover, the power of the antenna can not be sufficient to ensure a radio coverage inside the buildings or outside in dense urban areas. To limit the number of macro base stations and unload part of their user traffic, the engineers have designed home base stations to be installed at subscriber or business premises. A home base station provides wireless communication services within a small radio coverage area referred to as a home cell. The home base station is connected to the service provider's network via broadband (such as DSL or cable). The home base station incorporates the functionality of a typical base station but extends it to allow a simpler and self contained deployment.

Home cells, such as microcells or femtocells, are expected to be deployed in conjunction with a macro-cellular network in an overlay configuration. For example, a macro-cellular network may be used to provide wireless connectivity to a neighborhood that includes numerous residences. Any mobile device traveling through the neighborhood or located in one of the residences may access the wireless communication system using the macro-cellular network. Individual home cells may be deployed in one or more of the residences to provide overlay coverage within (or near) the residence. Clusters of home cells may also be deployed in one or more of the buildings to provide overlay coverage within (or near) the building. In either case, there will be a one-to-many relationship between one macrocell and the underlying home cells.

A home cell may communicate with mobile devices within a range of a few meters to several tens of meters. With this manner, a home cell allows service providers to extend service coverage indoors, especially where access would otherwise be limited or unavailable. However, mobile devices will typically only be allowed to camp on selected home cells. For example, user equipment operated by an individual user can be allowed to camp on home cells that were installed by the user in his residence. For another example, user equipment operated by employees can be allowed to camp on home cells in a home cell cluster installed by a business unit in its facility. As the user moves throughout the geographic areas served by the macrocells and the home cells, the user equipment can be handed off between the macrocells and the home cells.

Currently, a home cell has an access control list (ACL) that controls the subscribers that can access the wireless network via the femtocell. A subscriber needs to be added to this list prior to gaining access to network. And in a said closed mode, a home cell is not normally allowed to handle the communication of a user that is not registered in the ACL associated with the home cell .

It is thus important to be able to manage the ACL by taking into account the mobility of the users throughout the radio access network. The versions of the 3GPP prior to Release 9 do not envisage satisfactory management of this ACL in any Network Element (NE).

Currently, it is difficult to manage the accessibility of the resources when a mobile device moves from a macrocell towards a home cell and reciprocally, or from a home cell towards another home cell. This mobility must be ensured whatever is the type of Radio Access Technology (RAT) used by the mobile device: 2G/GSM/GERAN, 3G/UMTS, 3G+/HSPA or 4G/LTE. For a mobile device's user, it is important to move without call drop, or with a very low risk of call drop. This requirement of radio coverage continuity and/or quality of service continuity does not apply to private networks (e.g., of Wi-Fi type) where call drop can be accepted.

### SUMMARY OF THE INVENTION

In a first aspect of the invention, a method to manage mobility of a mobile device moving within a macro cell having a first radio coverage area including a plurality of home cells, and comprises the step of establishing a communication session with said mobile device within said macro cell, and is characterized in that the method further comprises the steps of:
- determining at least one allowable home cell which said mobile device is allowed to access, and at least one cell location for respective said at least one allowable home cell,
- determining a second radio coverage area within the first coverage area comprising said at least one cell location,
- detecting said mobile device entering said second radio coverage area, and thereupon
- triggering said mobile device to start measuring signals broadcast by said at least one allowable home cell.

With this manner the mobile device is triggered to start measuring pilot signals from an allowable home cell when such an allowable home cell is expected to be in close vicinity, and not at all time, thereby reducing the consumed power for the mobile device and saving processing time for the measurements. The measurements are triggered when the mobile unit enters in a cell coverage area based on one or more allowable home cell location.

The cell location may refer to the location of the home base station operating the allowable home cell (point location), or to the location of the radio coverage area of the allowable home cell (area location).

In another aspect of the invention, a radio controller controlling a macro cell having a first radio coverage area including a plurality of home cells is configured to:
- establish a communication session with a mobile device located within said macro cell, characterized in that the radio controller is further configured to:
- determine at least one allowable home cell within the first radio coverage which said mobile unit is allowed to access, and at least one location related to respective said at least one allowable home cells,
- determine a second radio coverage area within the first coverage area comprising said at least one allowable home cell from said at least one determined location,
- detect that said mobile unit is entered into said second radio coverage area,
- trigger said mobile unit to start measuring signals from said at least one allowable home cells

The radio controller may be a Base Station Controller (BSC) for GSM standard, or a Radio Network Controller (RNC) for UMTS standard, or an eNode B for LTE standard. With this manner the radio controller triggers the mobile unit to start measuring signals at the right time.

Several techniques exist in order to locate mobile devices. According to a first variant, the second coverage area is a crown, or a sector thereof, centered around a macro base station operating said macro cell. Also, the detecting step is achieved by comparing a timing advance value used by said mobile device in said macro cell versus first and second timing advance thresholds, which first and second timing advance thresholds being determined from said at least one cell location. According to a second variant, the mobile contains a radio receiver GPS supplying the GPS coordinates of the mobile device.

According to an improvement, the triggering step comprises the step of sending at least one physical cell identifiers for respective said at least one allowable home cell, and for which said mobile device shall report measurements. With this manner, the mobile device makes measurements only for the received physical cell identifiers, which reduces the number of the measurements and thus the processing time for the measurements.

According to an improvement, the determination of said at least one allowable home cell is carried out by querying a mobility management node with a mobile identifier of said mobile device. At least one cell location is retrieved, as well as at least one cell global identifier for respective said at least one allowable home cells.

According to an improvement, the method comprises a step of detecting a particular home cell as being a candidate target cell suitable for handling said communication session, a step of requesting said mobile device (101) to retrieve a particular cell global identifier of said particular home cell and a step of checking whether said particular home cell forms part of said at least one allowable home cell by means of said particular cell global identifier.

According to an improvement, the method of managing mobility of a mobile device allows the handing over said communication session towards a particular home cell, or the initiating a new communication session in this particular cell in the event of this particular home cell forming part of said at least one allowable home cell.

According to an improvement, the method of managing mobility of a mobile device allows the handing over said communication session towards a particular home cell, or the initiating a new communication session in this particular cell in the event of this particular home cell forming part of said at least one allowable home cell.

In still another aspect of the invention, a mobility management node communicating with a radio controller controlling a macro cell having a radio coverage area including a plurality of home cells operated is configured to:
receive a query from a radio controller containing at least an identifier of a mobile device,
return at least one home cell global identifier for respective at least one allowable home cell for said mobile device, and at least one cell location for respective said at least one allowable home cell.

### BRIEF DESCRIPTION OF THE DRAWINGS

The features of the embodiments of the present method and apparatus are set forth with particularity in the appended claims. These embodiments may best be understood by reference to the following description taken in conjunction with the accompanying drawings, in the several figures of which like reference numerals identify like elements, and in which:
Figure 1 represents schematically a block diagram of communication system including communication equipment in which embodiments of the invention may be implemented;
Figure 2 is a call flow diagram illustrating a first variant of embodiment of the present application;
Figure 3 is a call flow diagram illustrating a second variant of embodiment of the present application;
Figure 4 is a call flow diagram illustrating a third variant of embodiment of the present application;
Figure 5 depicts the main exchanges between an UE, an eNodeB and a MME according to a first variant of embodiment;
Figure 6 depicts the main exchanges between an UE, an eNodeB, a MME and the MS of the eNodeB according to the variant of embodiment corresponding to the figure 4;
Figure 7 is a flow diagram depicting an example of embodiment according to the present method and apparatus;
Figure 8 conceptually illustrates an exemplary embodiment of a method of handing off user equipment moving between a macrocell managed by an eNodeB and a femtocell.

### DETAILED DESCRIPTION of PREFERRED EMBODIMENTS

The disclosed subject matter will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning i.e. a meaning other than that understood by skilled artisans, such a special definition will be expressly set forth in the specification in a definitional manner that directly and unequivocally provides the special definition for the term or phrase. The present invention will be specifically described in a case where the Home Base Station is installed at a user's home or at an enterprise's facility. However, such a base station may be installed in any area where an Internet connection is available such as an office and the purpose of the invention is not limited to a home or enterprise installation.

The managing unit is a basic component of a cellular mobile radio access network (of technology called GERAN, UTRAN, eUTRAN or CDMA2000) that manages macro-cells or femto-cells. The managing unit may include one transmitter/receiver (transceiver, TRX) and one relay antenna (e.g. eUTRAN eNodeB/HeNB or UTRAN HNB). The managing unit includes control plane functionality, an interface with an upper level (controller node or gateway or core network).

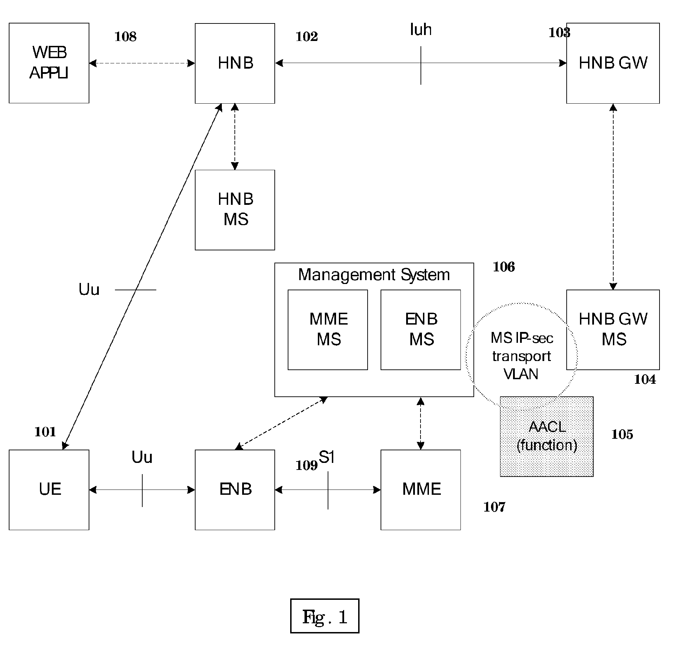

Figure 1 depicts an embodiment according to the present method and system that supports controlling of mobile mobile to move into several types of cells and to use several types of Radio Access Technology (RAT).

A mobile device 101 may communicate by radio with a HNB 102 and an ENB 3. The HNB 102 may to operatively coupled to a HNB network gateway 103 (HNB GW) via a router/modem and DSL or cable network. The HNB GW 103 may be operatively coupled to HNB GW Management System (MS), The HNB GW Management System is associated with a HNB GW registration database (not shown). The Management System supports an Automatic Access Control List (AACL) function 105. The HNB GW Management System may be operatively coupled with a Mobile Management Entity (MME) that performs functions including authenticating users, assigning temporary identification to UEs 101, and controlling hand-off from one eNodeB base station 3 to another eNodeB 3. A Web Interface 108 allows an operator information technology (IT) system (operator of the femtocell) to interact with its OAM network and notably, to introduce the allowed ACL associated with the femtocell.

It will be appreciated that the network elements listed above may take a variety of forms as will be apparent from the discussion below. For example, the network into which the presently described embodiments are incorporated may be a UMTS network. So, the network elements may take the form of serving GPRS support nodes and other connected network elements that reside in a UMTS network. It should be appreciated that the principles of the presently described embodiments may be applied to a variety of other types of networks.

Contrary to networks such as WiFi, the networks 3G/3G+ and 4G are operated networks where the mobile operator controls the users who are allowed to get access to his network. The operator IT system configures the access control list to his subscribers through WEB application 108 (ACL goes from an operator IT system to OAM) as it is the case for the networks 3G/3G+ and 4G of small cells such as a femtocell. Femtocells are an alternative way to deliver the benefits of fixed mobile convergence (FMC). The distinction is that most FMC architectures require a new (dual-mode) handset which works with existing home/enterprise Wi-Fi access points, while a femtocell-based deployment will work with existing handsets but requires installation of a new access point. An operator managed network of small cells may be deployed in at least two modes: either open (Open Access) or closed (Closed Access). Open mode may be deployed to improve the radio coverage frequency. The Closed mode may improve the Home Service for example through preferential fares for the calls either emitted or received from the subscriber's home. The operator of the femtocell can configure a femto cell in a Closed mode that can be defined with one CSG or one ACL. The CSG defines the Closed Subscribed Group. The ACL defines the Access Control List. Both CSG and ACL allow to limit the number of users allowed to access to the small cell. The ACL contains the list of the users allowed to access to the small cell.

The access control list may be used to enforce a variety of access policies by controlling which IP packets are allowed to enter a network, based on a plurality of rules. For example, it may include rules that disallow some network users to communicate with specified users. Or, the rules may block access to a node not only based on the packet source address, but also on the destination address, protocol type, TCP port source or destination. Also, the ACL may include rules that limit access to a node to a specific data rate to avoid overwhelming the node.

Therefore, only users registered in the ACL of the small cell are allowed to use the resources of the cell. In a home femtocell, these users are typically the subscriber of the cell and the users registered by an operator IT system to OAM through a WEB service. In an enterprise femtocell, the users are the employees.

In the operator managed networks, the radio coverage is calculated to reduce the call drop rate and offer to the subscriber both good quality of service (QoS) and quality of experience (QoE) thanks to a seamless mobility. To do that, a great number of femtocell 3G/UMTS and 3G+/HSPA are deployed to cover a large area: femto cells may here be managed in Open mode. A function ACL is more necessary when Operators manage femto cells in closed mode. In this case, the owner of the femtocell which is also the manager of the ACL of the femtocell defines this list through the Web application 108.

When a new user arrives from outside the femtocell, he is already connected to a macrocell and he enters under the cover of the small cell. The controller of macrocell may decide to start a mechanism of mobility from a macrocell towards a small cell. Following a trigger of the type "radio coverage" or of type "home service", the source 3G RNC or the source 4G eNB may start a procedure dedicated procedure of handover from the macrocell towards the small cell for this user. Following what, the target CN or 3G RAN (e.g. 3G HNB or 3G HNB GW) or the target CN or 3G RAN (e.g. 3G HeNB or 3G HeNB GW) may accept the handover if this new user is allowed to use the resources of the small cell that is the destination of this handover.

From the standpoint of the target small cell, the ACL of the small cell is checked to determine if the new user is allowed or not to be managed by the femtocell controller. a general manner, the ACL of the small cell is stored locally, for example in the controller of 3G femtocell (e.g. HNB GW) or 4G femtocell (e.g. HeNB GW). ACL can also be a function of the core network so may even be outside the H(e)NBGW.

From the standpoint of the source macrocell, the radio controller must know a priori if this user is allowed to use the resources of the target small cell that is the destination of this handover. To do that, the source radio controller stores and updates an agglomerated list of several Access Control Lists which comes from the greatest possible number of femtocells which is under the radio coverage area of the source macro cell. As a variant, the source radio controller may also store and update a dedicated list with a single user associated with several cells, this dedicated list being created at the time of the creation of the call context and stored in this call context.

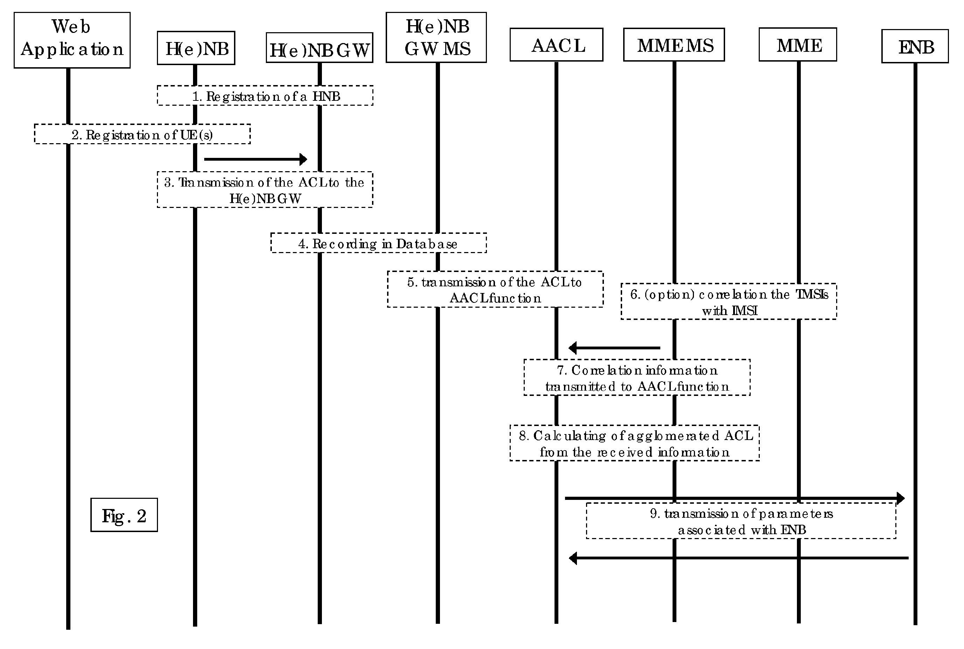

A call flow showing an example of the presently described embodiments where a AACL function is added in the controller in order to consolidate the H(e)NB neighboring in the data model of the controller, is provided in Figure 2.

As shown, at line 1, a HNB is registered at an H(e)NB GW level. The specification 3GPP TS 25.467 describes the procedure of HNB registration by mean of which the HNB informs the HNB-GW that it is now available at a particular IP address. At line 2, using a WEB service, an operator IT system introduces the ACL, i.e. the list of users who are allowed to use the resources of one small cell. The end user may launch a user interface associated with an application that manages the list of end-users associated with the ACL. The user Interface may be composed with menus displaying on a screen and/or, keyboard, and/or mouse moving a focus on the menu, and/or speech recognition. Under the operator supervision, ACL or CSG membership may be added, removed and viewed. At line 3, the ACL is sent to the H(e)NB GW that manages the H(e)NB. The 3GPP TS 25.467 specification describes also the procedure of ME registration by mean of which the HNB conveys the ME identification to the HNB-GW for Access Control List for the ME in the HNB GW.

At line 4, the H(e)NB GW DataBase registration is regularly requested by H(e)NB GW registration MS (Management System of H(e)NB GW) to be informed about the new recorded or removed users. A good period of the request is one time per day. According to a variant, the H(e)NB GW Database registration sends each new entries to H(e)NB GW registration MS. At line 5, the contents of H(e)NB GW Database registration are sent by H(e)NB GW registration MS to AACL function (Automatic Access Control List). AACL function agglomerates the contents of the database coming from H(e)NB GW registration MS (System Management). AACL function allows auto configuration of the radio access network. The ACL's of each femtocell are thus incorporated and duplicated at the level of the controllers of radio networks. At line 6, with an optional manner, a node of the Core Network (e.g. MME for LTE) correlates the TMSI (Temporary Mobile Subscriber Identity) with the IMSI (International Mobile Subscriber Identity) of the mobile devices. The specification 3GPP TS23.003 describes that a unique IMSI is allocated to each mobile subscriber in the EPS system. In order to support the subscriber identity confidentiality service the MME allocates TMSI to visiting mobile UEs. The MME correlates an allocated TMSI with the IMSI of the UE to which it is allocated. A UE is allocated with one TMSI for the services provided via the MME. The IMSI-TMSI correlation database may be periodically requested by the MS of the MME. In a variant, the MME sent each change to the MME MS (one notification per collected changes). At line 7, the MME correlation database is sent by the MME MS to the AACL function. At line 8, the AACL function uses the data received to automatically calculate the ACL for each ENB. It may be collocated in ENB MS or implemented in another network element. The agglomeration of the ACL is then carried out.

The ACL is advantageously created by taking of account the proximity of the macrocell with the H(e)NB. The proximity of the macrocell with H(e)NB assumes the knowledge of the GPS coordinates of (e)NodeB and H(e)NB from which one function calculates the distance between a NodeB and a H(e)NB or between an eNodeB and a H(e)NB.

At line 9a, if the ENB overlays 3G/3G+ femtocells, then the AACL function sends to the ENB (which manages the macrocell), a request of the type HNB NEIGHBOURING UPDATE REQUEST (proprietary protocol) with information related to each HNB (which manages the 3G/3G+ femtocell):
- Localization parameters of the HNB (e.g. GPS coordinates of HNB),
- Identifier of the HNB,
- Operational parameter of the HNB,
- Operational radio parameters of the HNB.
- List of the mobile identifiers allowed to get access to the equipment.

This information may be completely or partially stored in the ACL. The ENB may send to AACL function an acknowledge message indicating that the update was effectively carried out HNB NEIGHBOURING UPDATE RESPONSE.

If the ENB overlays 4G femtocells (see line 9b of the figure 2), then the AACL function sends to the ENB (which manages the macrocell), a request of the type HeNB NEIGHBOURING UPDATE REQUEST (proprietary protocol) with information related to each HeNB (which manages the 4G femtocell):
- Localization parameters of HeNB (e.g. GPS coordinates of HNB),
- Identifier of HeNB,
- Operational parameter of the HNB,
- Operational radio parameters of the HNB,
- List of the mobile identifiers allowed to get access to the equipment,

This information may be completely or partially stored in the ACL. The ENB may send to AACL function an acknowledge message indicating that the update was effectively carried out HeNB NEIGHBOURING UPDATE RESPONSE

It should be noted that for handover one needs to identify accurately the small cell which is a candidate for the mobility. The small cell (e.g. femtocell) may be identified by different manner according to the type of RAT.
- If the small cell belongs to the eUTRAN, this cell is identified by the identifier "CellGlobalIdEUTRA". The "CellGlobalIdEUTRA" specifies the Evolved Cell Global Identifier (ECGI), i.e. the unique identifier of a cell in an E-UTRA network. It is formed with at least (1) the "plmn-Identity" that identifies the PLMN of the cell and (2) the "cellIdentity" that is the identifier of the cell within the context of the PLMN.

In order to reinforce the cell identification, the physical cell identity may be used and called PhysCellId that is used to indicate the physical layer identity of the cell, as defined in specification TS 36.211
- If the small cell belongs to the UTRAN, this cell is identified by the identifier "CellGlobalIdUTRA". The CellGlobalIdUTRA specifies the global UTRAN Cell Identifier, i.e. the unique identifier of a cell in UTRA network. It is formed with at least (1) the "plmn-Identity" that identifies the PLMN of the cell and (2) the "UTRA Cell Identifier" which is unique within the context of the identified PLMN.

In order to reinforce the cell identification, the physical cell identity may be used and called PhysCellIdUTRA-FDD that is used to indicate the physical layer identity of the cell, i.e. the primary scrambling code, as defined in specification TS 25.331.
- If the small cell belongs to the GERAN, this cell is identified by the identifier "CellGlobalIdGERAN". The "CellGlobalIdGERAN" specifies the Cell Global Identification (CGI), i.e. the unique identifier of a cell in GERAN network. It is formed with at least (1) the "plmn-Identity" that identifies the PLMN of the cell, (2) the "Cell Identifier" which is unique within the context of the GERAN location and (3) the "locationAreaCode" that is a fixed length code identifying the location area within a PLMN

In order to reinforce the cell identification, the physical cell identity may be used and called PhysCellIdGERAN that contains the Base Station Identity Code (BSIC): networkColourCode and baseStationColourCode as defined in TS 23.003
- If the small cell belongs to the CDMA2000, this cell is identified by the identifier "CellGlobalIdCDMA2000". The "CellGlobalIdCDMA2000" specifies the Cell Global Identification (CGI), the unique identifier of a cell in CDMA2000 network. It is formed with at least (1) the "cellGlobalId1XRTT" that is the unique identifier for a CDMA2000 1xRTT cell, which is formed with BASEID, SID and NID parameters (in that order) defined in C.S0005-A [25], and (2) the "cellGlobalIdHRPD" that is the unique identifier for a CDMA2000 HRPD cell, corresponds to SECTOR ID parameter defined in C.S0024-A [26, 14.9].

In order to reinforce the cell identification, the physical cell identity may be used and called "PhysCellIdCDMA2000" that identifies the PNOffset that represents the "Physical cell identity" in CDMA2000.

Implementation of the present invention may be handled in several ways according to the context. In an application in the UMTS (3G/3G+ UTRAN) network, the invention applies in a similar way, by replacing the MME by the SGSN/VLR and the ENB by the RNC. The steps 6 and 7 may be avoided if the IMSI is already known by AACL function, because the steps 4 and 5. 1.2

According to a variant of implementation, the invention applies to the GSM/GERAN context. In a 2G GSM/GERAN, the MME is replaced by SGSN/VLR and the ENB by the BSC. The steps 6 and 7 may be avoided if the IMSI is already known by AACL function because the steps 4 and 5.

The access to the resources delivered by a Femto Radio Access Network is controlled by an ACL which indicates the list of the allowed users UE.

In a GERAN of Radio Access Technology (RAT) called 2G/GSM/GERAN, the radio controller is a Base Station Controller (BSC). In a UTRAN of RAT called 3G/UMTS, 3G+/HSPA it is the Radio Network Controller (RNC); in a eUTRAN (evolved UTRAN) of RAT called 4G/LTE, it is an eNodeB.

In Femtocell or Small Cell in a more general way, the radio controller (enterprise or residential) is a Home NodeB (3G/UMTS or 3G+/HSPA HNB) or a HNB GW (Home NodeB Gateway) or a Home eNodeB (4G/LTE HeNB) or HeNB GW (Home eNodeB Gateway). In this case, this apparatus and the resources managed by this controller belong to a private individual or an enterprise who may not wish that they be used for other users. The node controller then has an ACL which defines the users allowed to communicate within the small cell (e.g. of the femtocell type).

Its evolution i.e. the version of the 3GPP Release 9 describes on the other hand a function equivalent to the ACL that is shared between the network and the mobile device (named "UE" in the standard LTE) to control the access to the radio operator small-cell: the UE which must maintain a list of control of access called "UE white-list".

According to a second variant, the AACL function is stored in the Core Network (CN) which manages the control plane, precisely in the MME (Mobile Management Entity) for the 4G/LTE. For networks of other types of RAT (2G or 3G or 3G+), the storage of the AACL may be supported by the 3G SGSN or 3G MSC or 2G MSC or 3G HNB GW. According to this variant, an AACL function extracts that is dedicated to the UE call, the extracted data is sent to the ENB after that the call context has been established in the eNodeB.

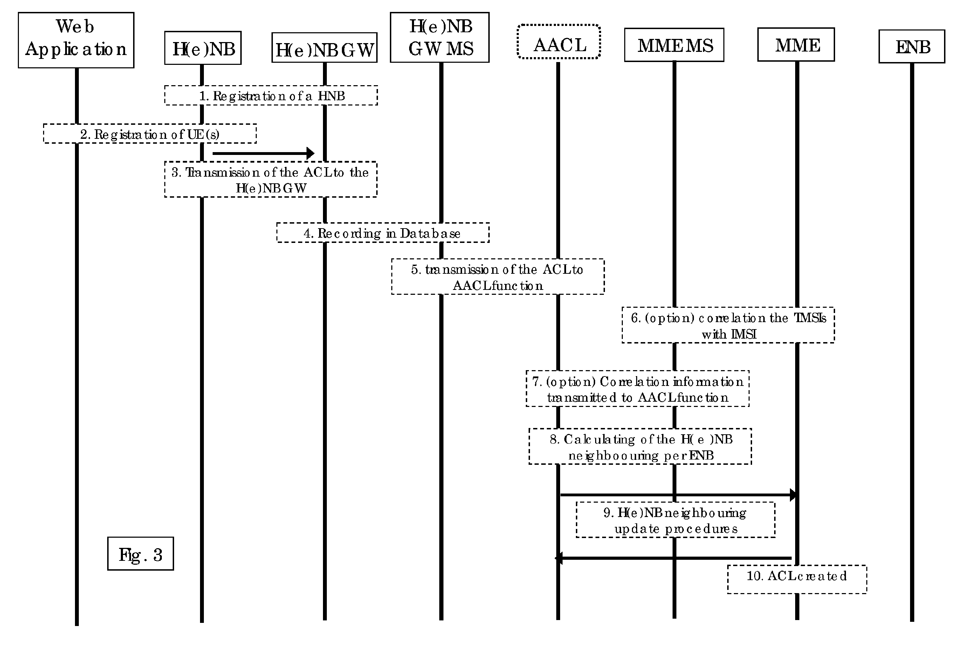

Figure 3 described the main exchanges for the implementation of an example of implementation of this second variant. The four lines are identical as the four lines described in the figure 2. At line 4, the H(e)NB GW Database registration is regularly requested by H(e)NB GW registration MS (Management System of H(e)NB GW) to be informed about the user entries newly modified, i.e. added or deleted. A good period for the request is once a day. According to a variant, the H(e)NB GW Database registration sends each new entries to H(e)NB GW registration MS. At line 5, at least a part of the content of H(e)NBGW Database Registration is transmitted by H(e)NB GW MS to the AACL function (Automatic Access Control List). In an optional manner, at line 6, a node of the Core Network (e.g. the MME for 4G/LTE network) correlates TMSIs (Temporary Mobile Subscriber Identity) with IMSIs (International Mobile Subscriber Identity) of the UEs. In an optional manner, the results of the correlation are transmitted by MME to AACL function. At line 8, AACL function determines H(e)NB's which are close to each ENB. AACL function uses the information received to calculate the ACL for each ENB. AACL function is implemented in Management System of MME, or elsewhere. The agglomeration of the ACL is then carried out in a global ACL which is located in the MME.

At line 9a, if the ENB overlays femtocells of 3G/3G+ type, the update of the ACL stored in the MME is carried out according to the HNB's which are located close to each ENB. The AACL function sends to MME a request of type HNB NEIGHBOURING UPDATE REQUEST with the following information associated with each HNB (which manages the 3G/3G+ femtocell):
- Location of the HNB,
- Identifier of the HNB,
- Operational parameter of the HNB,
- Operational radio parameters of the HNB,
- List of the mobile identifiers allowed to get access to the equipment,

This information may be completely or partially stored in the ACL. The MME may transmit to AACL function an acknowledge message called "HNB NEIGHBOURING UPDATE RESPONSE" in order to indicate that the update of the list was successfully completed.

If the ENB overlays femtocells of 4G/LTE type (see line 9b of the figure 3), the update of the ACL stored in the MME is carried out according to HeNB's which are located close to each ENB. The AACL function sends to MME a request of the type HeNB NEIGHBOURING UPDATE REQUEST with the following information associated with each HeNB (which manages the 4G femtocell)
- Location of the HeNB,
- Identifier of the HeNB,
- Operational parameter of the HeNB,
- Operational radio parameters of the HeNB,
- List of the mobile identifiers allowed to get access to the equipment

This information may be completely or partially stored in the ACL. The MME may transmit to AACL function an acknowledge message called "HeNB

NEIGHBOURING UPDATE RESPONSE" in order to indicate that the update of the list was successfully completed.

At line 10, the update of the global ACL list which is the agglomeration of the ACL lists of each H(e)NB is then carried out.

According to a third variant, the global ACL may be stored in the Management System of the eNodeB. With this manner, the eNodeB requests to its Management System the identifier of the femtocell (home or enterprise) which is found around the neighboring of the UE and which is allowed to communicate with it.

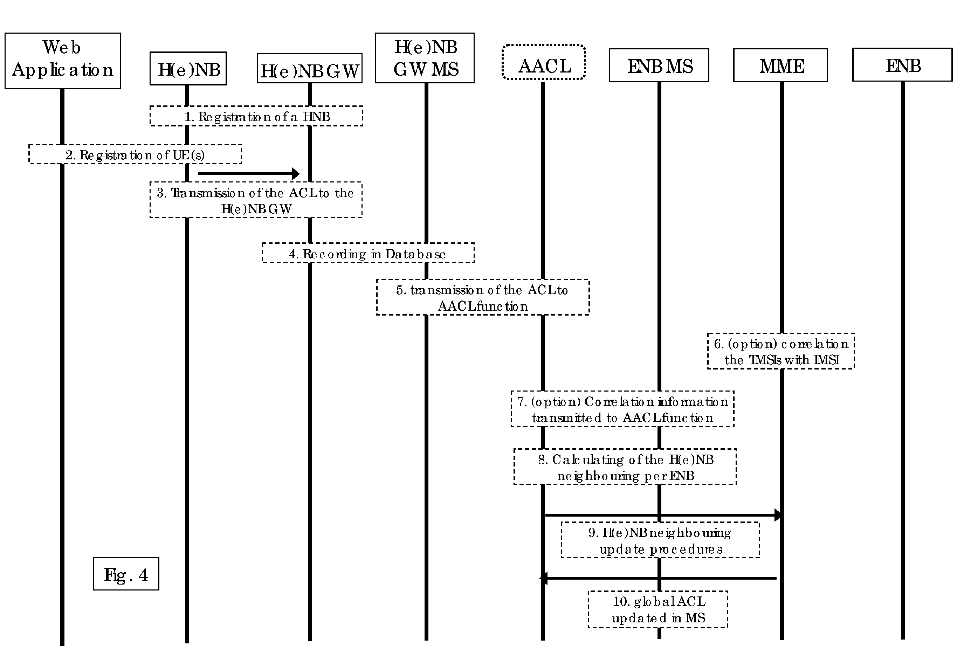

Figure 4 shows the main exchanges for the implementation of an example of implementation of this third variant. With regard to the figure 3, the lines 9 and 10 are changed so that the eNodeB communicates with its Management System to know the neighboring femtocell and so that the ACL is stored in the eNodeB MS.

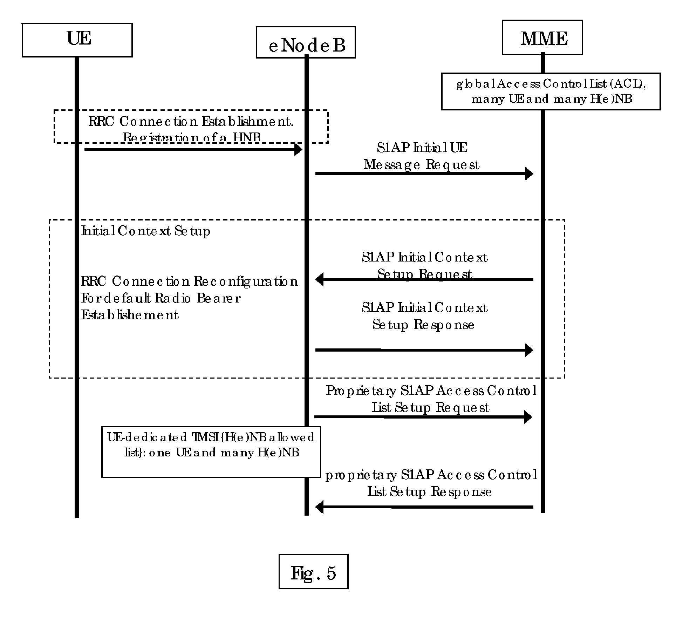

Figure 5 describes an example of messages exchanged between the UE, an eNodeB and the MME, during the establishment of the radio and network connection of this equipment. Initially, the UE is connected by radio with an eNodeB. Then, a message called "3GPP TS 36.413 S1AP Initial UE Message" is transmitted to the MME in the core network in order to indicate that a radio connection was successfully completed with a particular UE and that a dedicated S1 connection is required for this particular UE. Following what, the MME in the CN sends back a message called "3GPP TS 36.413 S1AP Initial Context Setup Request" which allows establishing the requested dedicated S1 connection with this particular UE and also which triggers the reconfiguration of the radio connection with this UE in order to establish one evolved Radio Access Bearer known as "default eRAB".

Following the success of the reconfiguration of the radio connection to establish the default eRAB, the eNodeB informs the MME that this radio configuration was successfully completed by sending a message called "3GPP TS 36.413 S1AP Initial Context Setup Response".

We may note that the S-TMSI identifying the UE can be transmitted by the UE during the RRC CONNECTION ESTABLISHMENT procedure (ue-Identity in RRC Connection Request message): if so, the S-TMSI is then stored in the eNodeB call context and transmitted by the eNodeB to the MME with message called "3GPP TS 36.413 S1AP Initial UE Message" (that may include the S-TMSI). This message allows the identification of the UE at the MME level. With this manner, the IMSI is not known by the eNodeB but by the MME which is able to ensure the correlation between the IMSI and the S-TMSI. If the S-TMSI is not provided by the RRC CONNECTION ESTABLISHMENT procedure; the S-TMSI is allocated by MME after Non Access Stratum (NAS) procedures between MME and UE.

The MME stores and updates the global ACL list that is made of the agglomerated list of all the couples {S-TMSI, HNB} corresponding to all the users, i.e. all the UE that are recognized by the network of the mobile operator access and that are managed by the MME. The MME seeks in the global ACL list the element corresponding to this particular UE using the S-TMSI previously received from the eNodeB. A data called "ACL Information Element" that corresponds to the particular connected UE is extracted from the global ACL list. The "ACL Information Element" data which belongs to the call context of the UE in the MME is transmitted to the eNodeB. Then, the eNodeB stores the received "ACL Information Element" data with the specific parameters associated with this UE in the dedicated call context already stored in the eNodeB.

In this way, the eNodeB stores only and on a per call context basis the ACL Information Element that concerns the UE's that are currently connected with this eNodeB. This feature may advantageously reduce the memory size required to store the ACL extracts. In the case of the first variant, where the eNodeB stores the global ACL list comprising also the UEs that are not connected to the eNodeB, the required memory size may be higher which may degrade the performances of the eNodeB product.

In the case of mobility from one macrocell towards another macrocell, for example from an eNodeB towards another eNodeB in the 4G RAT, a procedure of transfer of the ACL Information Element is implemented through X2AP interface.

In the case of mobility from one macrocell towards one 3G femtocell, a procedure of transfer of the ACL Information Element is used from the eNodeB to the HNB GW and from the HNB GW towards the femtocell (Home or Enterprise). The transfer of the ACL Information Element is performed on at the control plane level.

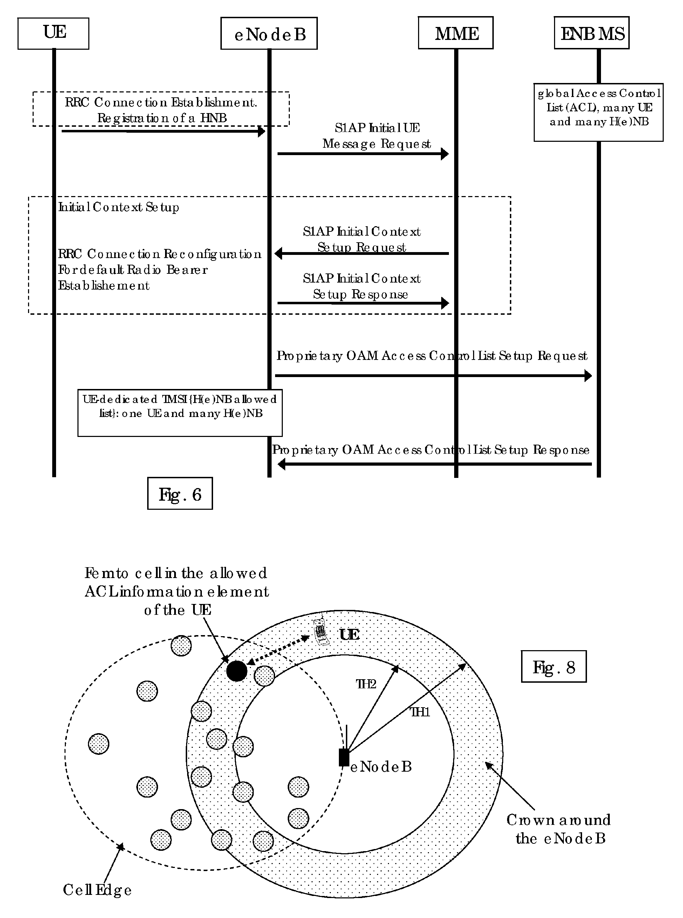

Figure 6 depicts the main exchanges between an UE, an eNodeB and the MME when the UE enters in communication with the femtocell, according to the third variant shown by the figure 4. With regard to the figure 5, the figure 6 shows the presence of the Management System of the eNodeB. The first exchanges between the UE and the eNodeB and between the eNodeB and the MME are identical to those of the figure 5. These exchanges of messages concern the establishment of an S1 connection type requested for a particular UE, the reconfiguration of the radio connection for this particular UE, and the transmission of a message towards the MME in order to indicate that the initial call context was successfully established.

According to this third variant, the eNodeB sends to its Management System a dedicated message called "Access Control List Setup Request" by using the OAM interface (Operating and Maintenance). With this message the eNodeB requests the Management System to seek for this particular UE in the global list ACL the element corresponding to this particular UE by using an identifier of the UE that was previously transmitted, for example the S-TMSI. The Management System sends back a message "Access Control List Setup Response" in order to send to the eNodeB of the information that are associated to the UE.

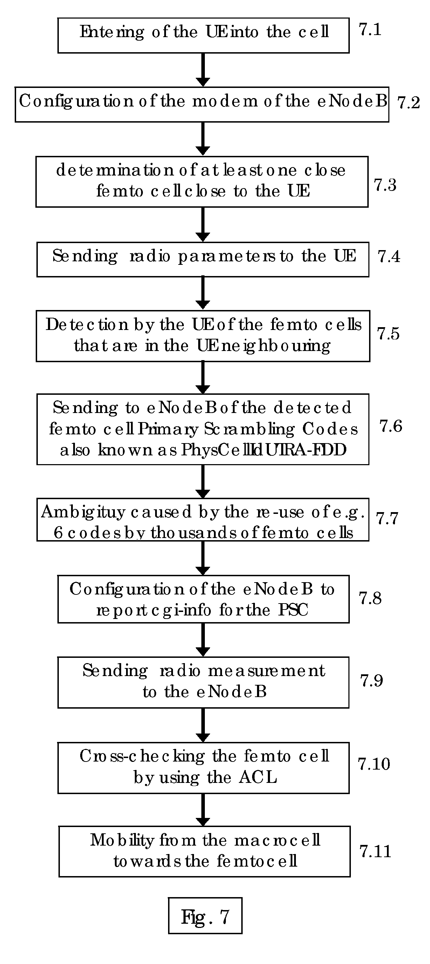

Figure 7 shows a flowchart of the steps allowing a UE to move from a macrocell towards a femtocell

At step 7.1, the UE enters into the macrocell managed by an eNodeB. The modem of the eNodeB is configured to calculate the Timing Advance with regard to the UE (step 7.2). Thus, it is possible to roughly calculate the radial distance between the UE and the eNodeB. At step 7.3, thanks to measurements of UE localization and the ACL contents, the eNodeB determines that the UE may be in the neighboring of one allowed femtocell. At step 7.4, the eNodeB sends to the UE a message "3GPP TS 36.331 RRC Connection Reconfiguration" with the radio measurement parameters so that the UE may perform radio measurements from the radio pilots sent by the femtocell in its neighboring. With a general manner, each 3G femtocell broadcasts in the downlink one pilot according to a particular primary scrambling code: the number of codes granted to the femtocells is for example 6 on the set for the entire radio access network of 3G/3G+ femtocells. The UE performs radio measurements and detects the physical cell identifiers of the neighboring femtocell. In case of 3G/3G+ femto-cells, these physical cell identifiers are called "Primary Scrambling Codes" and noted for example PSC or PhysCellIdUTRA-FDD. Advantageously, the UE measures also the downlink pilot power of the neighboring femtocells, which is useful to determine the quality of transmission in the downlink (step 7.5).

At step 7.6, the UE sends to the eNodeB the result of this measurement for one particular physical cell identifier and in particular for one or more identifiers (or PSC in case of 3G/3G+ femto-cells) of the detected femtocell in the neighboring of the serving LTE macro-cell. Since a set of e.g. six codes is only available for the configuration of thousand of femtocell, each of these six codes is associated with a large number of femtocells deployed on the femto network. Each code may point to thousands of femtocells. This ambiguity that is introduced by the code re-use means that one code cannot identify one single femtocell (step 7.7). Because the knowledge of one unique identifier for the femtocell is needed to perform in RRC connected mode (as per 3GPP TS 36.331 definition) the handover from e.g. one LTE macrocell towards e.g. one 3G/3G+ femtocell target, it is mandatory both to remove this PSC ambiguity and to determine accurately the identifier of the femtocell. At step 7.8, the eNodeB configures the UE so that this one reports the complete identifier of the cell UTRAN whose code was detected at step 7.5 and reported at step 7.6. This configuration by the eNodeB of the measurement by the UE requires a message called "3GPP TS 36.331 RRC Connection Reconfiguration" (step 7.8).

At step 7.9, the UE reports the result of this identity measurement (for example CellGlobalIdUTRA for a femtocell of 3G/3G+ type) after the UE was configured to perform identity measurement (step 7.8). The eNodeB receives this identity of the femtocell and determines if the UE is allowed to communicate with the femtocell by using the ACL data (step 7.10). If the ACL data indicates that the communication between the UE and the femtocell is allowed, then the eNodeB decides to trigger a mobility mechanism from the eUTRAN macro-cell towards the UTRAN femto-cells. Two cases are possible:
- a) If this decision of mobility mechanism is based on the release of RRC connection in the eUTRAN, the eNodeB transmits a message called "3GPP TS 36.331 RRC Connection Release" to the UE in order to indicate that the eNodeB is not any more in radio communication with the UE. The message is sent with redirection information towards a 3G/3G+ femtocell. Then, the UE initiates a synchronization procedure in order to get connected with a neighboring femtocell (step 7.11).
- b) If this decision of mobility mechanism is based on the continuity of connection and service without connection release (i.e. the chosen mechanism is a handover), the eNodeB source prepares the handover with the controller of the femtocell. Following what after a successful handover preparation in the target femtocell, the eNodeB transmits a message "3GPP TS 36.331 RRC Handover Command" with information useful for the UE to get connected with the neighboring 3G/3G+ femtocell: this message to the UE indicates that the UE must detach from the old LTE macro-cell and attach to the new 3G/3G+ femtocell. Then, the UE initiates synchronization procedures to get connected with the femtocell (step 7.11).

At the end of these steps (i.e. either a- the release of radio connection or -b the execution of the handover), the UE is connected with an HNB (domestic or enterprise).

According to another variant, the present invention may be used in the 3G Packet Switch Domain. In this case, the equivalent element of MME is the SGSN and the equivalent element of the eNodeB is the RNC. If the invention is used in a 3G in circuit switch domain CS, the equivalent element of MME is the MSC, and the equivalent element of the eNodeB is also the RNC. For these two networks, the general principles of the communications and the sharing of the ACL remain the same: the global ACL list is stored and updated at the level of the controllers of the Core Networks: MME, SGSN, MSC or H(e)NB gateway. The femto eNodeB and BSR receive only extracts of this list called ACL Information Element on a per call context basis.

In order to manage the mobility of the UE from one cell (macrocell or small cell) to another (macrocell or small cell), it is needed to locate the UE compared to the femtocell and preferably in a real-time fashion. At the time being, numerous localization software methods are known by the skilled person. The location is performed by determining times of transmission (called "Timing Advance" or "TA") of the messages between the eNodeB and the UE. The more the UE is far, the more the timing advance to communicate with the UE is large. Two TA thresholds are configured and the gaps between the two thresholds determine an area where the mobile is located

Figure 8 illustrates the entrance of an UE in a cell location covered by an eNodeB. Two thresholds are represented defining a crown that is e.g. ten meters wide, or a sector of a crown, of 120 degrees for example. By simplifying, when the TA of the messages is between the two thresholds, then the UE is in the crown centered by the eNodeB, i.e. the UE radial distance from the eNodeB is lower than a first distance and greater than another second distance. The measured values of TA are performed at the level of the radio modem of the eNodeB and reported from the modem to the call processing layer (called CaIIP) of the eNodeB. By comparing measured TA values, the eNodeB may know if the UE enters the crown or leaves the crown defined by the two aforementioned thresholds. This localization method is advantageously very simple, consumes computing resources lower than other location techniques but the invention is not limited to this technique. Other different techniques exist in order to locate mobiles, in particular by using the triangulation with several eNodeBs, but this last technique uses larger computing resources and it is less relevant to use it for the present invention. More precisely, this last technique needs to receives signal and the associated

Timing Advance emitted from at least three eNodeBs. If the Mobile Unit contains a receiver module of GPS signals, it can determine its own location with this technique and transmit the location coordinates to the connected eNodeB. Each second typically, the mobile unit sends its GPS coordinates to the connected eNodeB.

Figure 8 shows a femtocell allowed to communicate with an UE, i.e. this femtocell is registered in the ACL for this UE. The crown thresholds are defined based upon the location of the femtocell allowed to get connected with the UE as per ACL information. When the UE enters the crown around an eNodeB, the eNodeB recognizes the UE entrance and seeks one or more femtocell(s) that is (are) allowed for communicating with the UE and which is (are) in the crown where the UE is located. The location parameters of the femtocells are stored in the global ACL and the ACL information elements with the other parameters associated with each femtocell.

For a particular UE, the choice of an allowed femtocell may be based by using measurements of radio quality in downlink measured one the radio pilot of a femtocell. Theses radio measurements are triggered since the mobile enters a crown that contains at least one allowed femtocell. Radios measurements are performed for each physical cell identifier (i.e. Primary Scrambling Code in the case of 3G femtocell). It should be noted that the search of the femtocell physical cell identifier consumes electrical power at the UE level; so advantageously, the seeking is triggered only when the UE enters a crown surrounding an eNodeB and containing an allowed femtocell (see the figure 8).

When the UE detects the presence of at least one femtocell with the radios measurements configured by the eNodeB, a procedure of mobility towards the femtocell (release and redirection to the femto carrier or handover to the femto cell) may be initiated by the eNodeB (said source) towards the HNB of femtocell (said target). Then, the eNodeB may thereafter handover the radio connection of the UE from the source macro cell (managed the source eNodeB) to target femto cell (managed by the target Home NodeB).

The crown usage reduces the number of femtocells to be measured by an UE. Indeed, several thousands of femtocells may be in the area covered by one eNodeB, the crown usage that defines a minimum and maximum distance with the eNodeB allows for limiting the number of femtocells which may be candidate for UE handover from macro to femto.

The particular embodiments disclosed above are illustrative only, as the disclosed subject matter may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the disclosed subject matter.

## Claims

1. A method for managing mobility of a mobile device (101) moving within a macro cell having a first radio coverage area including a plurality of home cells, and comprising the step of establishing a communication session with said mobile device (101) within said macro cell, **characterized in that** the method further comprises the steps of:
- determining at least one allowable home cell which said mobile device (101) is allowed to access, and at least one cell location for respective said at least one allowable home cell,
- determining a second radio coverage area within the first coverage area comprising said at least one cell location,
- detecting said mobile device (101) entering said second radio coverage area, and thereupon
- triggering said mobile device (101) to start measuring signals broadcast by said at least one allowable home cell.

2. A method according to claim 1, wherein said second coverage area is a crown, or a sector thereof, centered around a macro base station (109) operating said macro cell, and wherein said detecting step is achieved by comparing a timing advance value used by said mobile device (101) in said macro cell versus first and second timing advance thresholds, which first and second timing advance thresholds being determined from said at least one cell location.

3. A method according to claim 1, wherein said detecting step is achieved by using GPS coordinates supplied by said mobile device (101).

4. A method according to any of claims 1 to 3, wherein said triggering step comprises the step of sending at least one physical cell identifier for respective said at least one allowable home cell, and for which said mobile device (101) shall report measurements.

5. A method according to any of claims 1 to 4, wherein determination of said at least one allowable home cell is carried out by querying a mobility management node with a mobile identifier of said mobile device (101), and by retrieving said at least one cell location as well as at least one cell global identifier for respective said at least one allowable home cell.

6. A method according to any of claims 1 to 5, further comprising the steps of:
- detecting a particular home cell as being a candidate target cell suitable for handling said communication session,
- requesting said mobile device (101) to retrieve a particular cell global identifier of said particular home cell,
- checking whether said particular home cell forms part of said at least one allowable home cell by means of said particular cell global identifier.

7. A method according to claim 6 further comprising the steps of handing over said communication session towards said particular home cell in the event of said particular home cell forming part of said at least one allowable home cell.

8. A method according to claim 6 further comprising the steps of initiating a new communication session in said particular home cell in the event of said particular home cell forming part of said at least one allowable home cell.

9. A radio controller (109) controlling a macro cell having a first radio coverage area including a plurality of home cells, and configured to:
- establish a communication session with a mobile device (101) located within said macro cell, **characterized in that** the radio controller (109) is further configured to :
- determine at least one allowable home cell within the first radio coverage which said mobile unit (101) is allowed to access, and at least one cell location for respective said at least one allowable home cell,
- determine a second radio coverage area within said first radio coverage area comprising said at least one cell location,
- detect said mobile unit (101) entering into said second radio coverage area,
- trigger said mobile unit (101) to start measuring signals from said at least one allowable home cells.

10. A radio controller (109) according to claim 9, **characterized in that** the radio controller is further configured to send at least one physical cell identifier for respective said at least one allowable home cell, and for which said mobile device (101) shall report measurements.

11. A radio controller (109) according to claim 9 or 10, **characterized in that** said radio controller is further configured to query a mobility management node with a mobile identifier of said mobile device (101), and to retrieve said at least one cell location as well as at least one cell global identifier for respective said at least one allowable home cell.

12. A radio controller (109) according to any of the claims 9 to 11, **characterized in that** said radio controller is further configured to detect a particular home cell as being a candidate target cell suitable for handling said communication session, to request said mobile unit (101) to retrieve a particular cell global identifier of said particular home cell, and to check whether said particular home cell forms part of said at least one allowable home cell by means of said particular cell global identifier.

13. A radio controller (109) according to claim 12 comprising a means for handing over said communication session towards said particular home cell in the event of said particular home cell forming part of said at least one allowable home cell.

14. A radio controller (109) according to claim 12 comprising a means for initiating a new communication session in said particular home cell in the event of said particular home cell forming part of said at least one allowable home cell.

15. A mobility management node (107) communicating with a radio controller (109) controlling a macro cell having a radio coverage area including a plurality of home cells operated, and configured to:
receive a query from said radio controller comprising at least a mobile identifier of a mobile device,
return at least one home cell global identifier for respective at least one allowable home cell for said mobile device, and at least one cell location for respective said at least one allowable home cell.
